# EUROPEAN PATENT APPLICATION

(11) **EP 3 048 658 A1**
(43) Date of publication of application: **27.07.2016**
(21) Application number: 15151859.4
(22) Date of filing: 20.01.2015
(51) Int. Cl.: H01M 2/10

(54) **Secondary battery assembly with enhanced protection**

(71) Applicant: Hwang, Hong-Wen, Hsinchu City 300 (TW)
(72) Inventor: Hwang, Hong-Wen, Hsinchu City 300 (TW)
(74) Representative: Lang, Christian

(57) **Abstract**

The present invention discloses a secondary battery assembly with enhanced protection, which comprises a battery assembly whose two sides respectively have two electric conduction members each electrically connected with a lead; a casing having an accommodation space accommodating said battery assembly; and a protection layer into said casing fully to wrap said battery assembly. The secondary battery assembly is electrically connected with and supplies power to external devices through the leads. The protection layer is in a solid state at an ambient temperature and melts into a liquid state at a high temperature. The protection layer isolates the battery assembly from the external environment and absorbs and conducts heat generated by the battery assembly efficiently. Therefore, the present invention can prevent the overheated battery assembly from reacting with oxygen and exempt the battery assembly from combustion and explosion.

## Description

### BACKGROUND OF THE INVENTION

### Field of the Invention

The present invention relates to a secondary battery assembly, particularly to a secondary battery assembly with enhanced protection against the external environment.

### Description of the Related Art

The so-called secondary battery is a battery that can be recharged and reused after the power thereof is exhausted. Because green energy has been the trend, many motorcycles, automobiles and large-size machines are not powered by gasoline but driven by electricity. Motorcycles, automobiles and large-size machines need high power energy supply. Therefore, secondary batteries are cascaded with electric conduction plates to form a battery assembly able to supply higher electric power.

A battery assembly, which is applied to a vehicles or a large-size machine used outdoors, may be affected by humidity or rain and experiences current leakage. If a vehicles or a large-size machine is in an environment of a subzero temperature, the battery assembly thereof may be frozen and unable to generate electric power or have current leakage. In worse cases, the used may be harmed by the explosion or leakage current of a battery assembly. A battery assembly may be heated to a high temperature because of inappropriate discharge. If the heat is not dissipated appropriately, the battery assembly may explode. Therefore, protecting a battery assembly from the external environment and effectively dissipating heat are critical to the battery assembly.

Accordingly, the present invention proposes a secondary battery assembly with enhanced protection to overcome the abovementioned problems.

### SUMMARY OF THE INVENTION

The primary objective of the present invention is to provide a secondary battery assembly with enhanced protection, wherein heat generated by the secondary battery assembly is conducted to the external lest the secondary battery assembly be overheated, and wherein the secondary battery assembly is isolated from external air and humidity lest the secondary battery assembly be damped, and wherein the secondary battery assembly is exempted from being frozen.

Another objective of the present invention is to provide a secondary battery assembly with enhanced protection, which has simple structure, high fabrication efficiency and low fabrication cost.

To achieve the abovementioned objectives, the present invention proposes a secondary battery assembly with enhanced protection, which comprises a battery assembly, a casing and a protection layer. The two sides of battery assembly respectively have two electric conduction members each electrically connected with a lead. The casing has an accommodation space accommodating the battery assembly. The casing is filled up with the protection layer. The protection layer wraps the battery assembly and exposes the leads. The protection layer is in a solid state at an ambient temperature and melts into a liquid state at a high temperature. The protection layer isolates the battery assembly from the external environment, protects the battery assembly and conducts heat efficiently.

Below, embodiments are described in detail to make easily understood the objectives, technical contents, characteristics and accomplishments of the present invention.

### BRIEF DESCRIPTION OF THE DRAWINGS

- Fig.1: is a perspective view schematically showing the appearance of a secondary battery assembly with enhanced protection according to one embodiment of the present invention;
- Fig.2: is a perspective view schematically showing the structure of a secondary battery assembly with enhanced protection according to one embodiment of the present invention;
- Fig.3: is a perspective view schematically showing the process of fabricating a protection layer of a secondary battery assembly with enhanced protection according to one embodiment of the present invention; and
- Fig.4: is a perspective view schematically showing the assemblage of battery assembly according to one embodiment of the present invention.

### DETAILED DESCRIPTION OF THE INVENTION

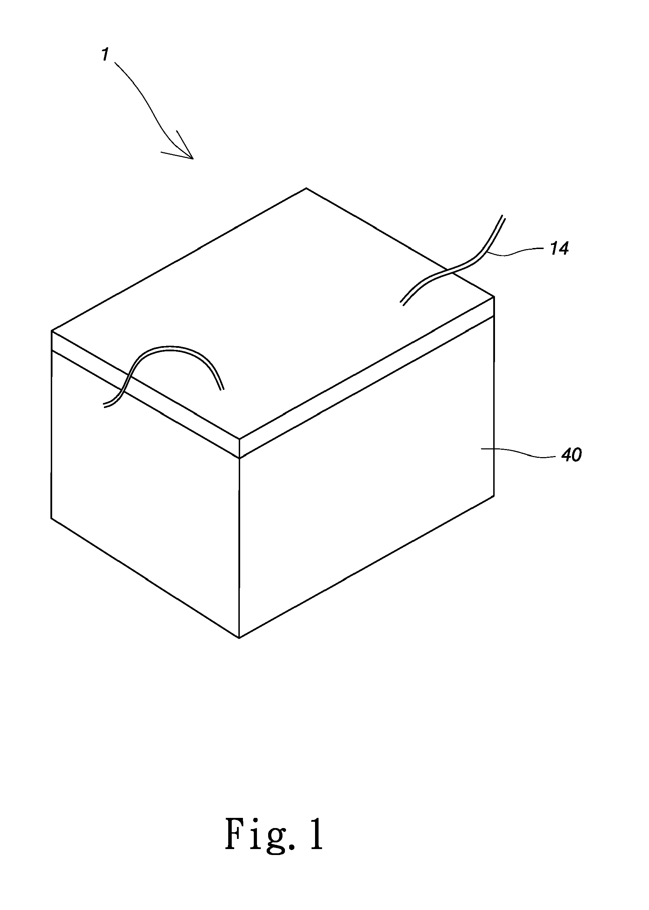

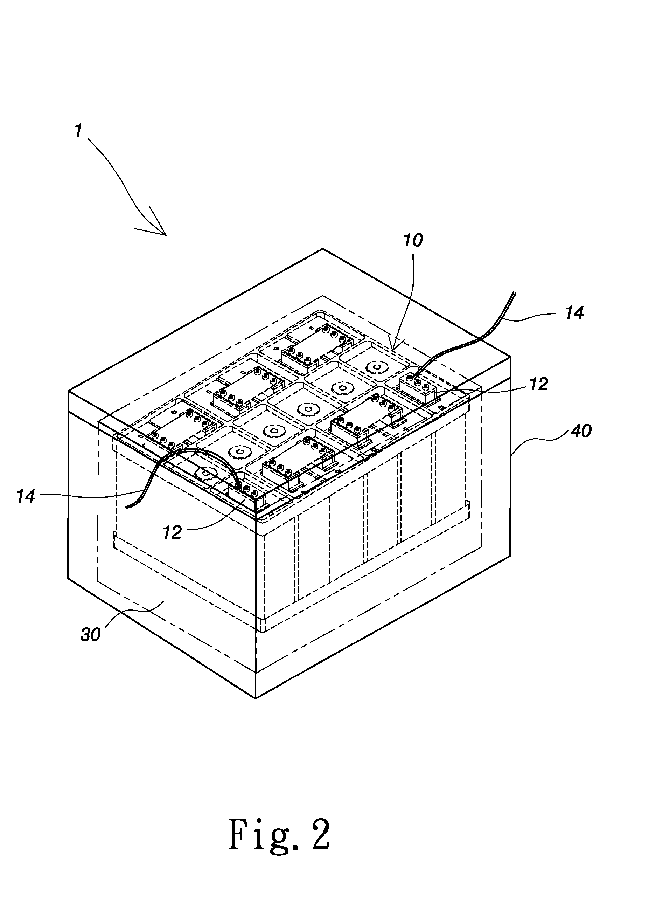

Refer to Fig.1 and Fig.2. The secondary battery assembly 1 with enhanced protection of the present invention comprises a battery assembly 10, the two sides of the battery assembly 10 respectively have two electric conduction members 12 each electrically connected with a lead 14. A casing 40 has an accommodation space 42 accommodating the battery assembly 10. The residual room of the casing 40 is filled up with a protection layer 30. The protection layer 30 wraps the battery assembly 10 and exposes only the leads 14 to the external. The battery assembly 10 is electrically connected with external devices through the leads 14 to supply power to the external devices. In one embodiment, the protection layer 30 is made of wax, which is in a solid state at an ambient temperature and melts into a liquid state at a high temperature. The protection layer 30 completely wrapping the battery assembly 10 can isolate the battery assembly 10 from the external environment and temperature. While the external temperature is decreased to below 0°C, the protection layer 30 can prevent the battery assembly from freezing. The protection layer 30 can effectively isolate the battery assembly 10 from humidity and prevent the battery assembly 10 from being damped. The protection layer 30 can prevent the battery assembly 10 from contacting combustion assistant gases (such as oxygen). While the battery assembly 10 is overheated, the protection layer 30 prevents oxygen from reacting with the overheated battery assembly, which may cause combustion and explosion. The protection layer 30 melts into a liquid-state protection layer at a temperature of 46-90°C. While the temperature of the battery assembly 10 rises to over a temperature of 46-90°C, the protection layer 30 begins to melt and absorb heat from the battery assembly 10. Therefore, the protection layer 30 can prevent the battery assembly 10 from overheating. The melted protection layer 30 keeps on isolating the battery assembly 10 from external temperature, humidity and air lest the overheated battery assembly 10 react with oxygen and explode. In the present invention, the casing 40 is made of a metallic material. In one embodiment, the casing 40 is made of aluminum. Aluminum has high thermal conduction efficiency. Therefore, the casing 40 can effectively dissipate the heat absorbed by the protection layer 30 and greatly increase the thermal conduction efficiency of the secondary battery assembly 1.

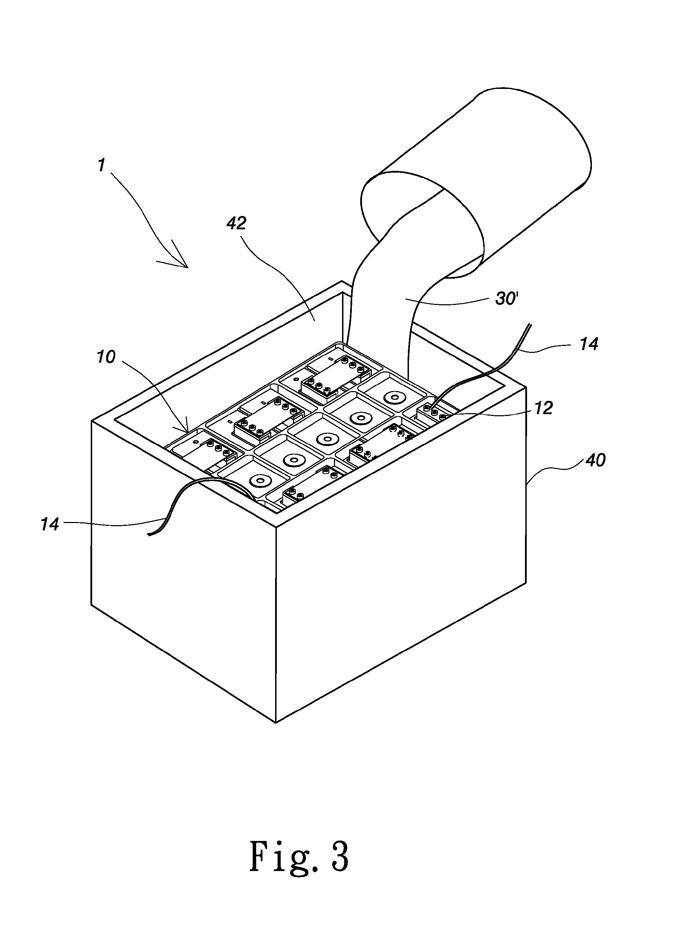

Refer to Fig.2 again, and refer to Fig.3. Fig.3 schematically shows how to wrap the battery assembly 10 with the protection layer 30. Firstly, the battery assembly 10 is placed in the accommodation space 42 of the casing 40. Next, the melted wax is poured into the casing 40 to fill up the casing 40, whereby the melted wax completely wraps the battery assembly 10 but exposes the leads 14. After the melted wax cools down and solidifies into a solid-state wax, the solid-state wax forms the protection layer 30 wrapping the battery assembly 10.

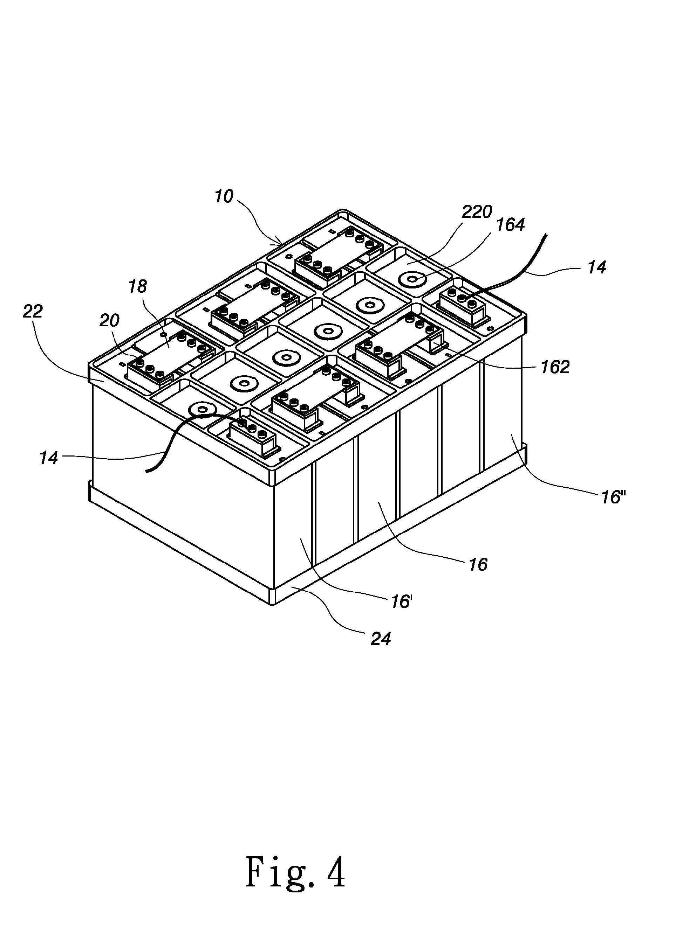

Refer to Fig.2 again, and refer to Fig.4. Fig.4 schematically shows the structure of the battery assembly 10. The battery assembly 10 includes a plurality of secondary batteries 16. The secondary batteries 16 are arranged side by side. Each secondary battery 16 has two electric conduction terminals 162 and a pressure-relief valve 164 disposed between two conduction terminals 162. The pressure-relief valve 164 is to release the pressure inside the secondary battery 16 lest too great an internal pressure cause the secondary battery to explode. The secondary batteries 16 are cascaded to form the battery assembly 10. A plurality of electric conduction plates 18 is used to cascade the secondary batteries 16. Each electric conduction plate 18 connects two electric conduction terminals 162 respectively of two neighboring secondary batteries 16. However, one electric conduction terminal 162 of the first secondary battery 16' and one electric conduction terminal 162 of the last secondary battery 16" are not connected with the electric conduction terminals of the neighboring secondary batteries 16 but are used as the electric conduction members 12 of the battery assembly 10. The electric conduction plate 18 is locked to two neighboring electric conduction terminals 162 with two fixing elements 20. In one embodiment, the fixing element 20 is a stainless steel screw.

The battery assembly 10 further includes a first fixing frame 22 and a second fixing frame 24 respectively arranged at the top ends and the bottom ends of the secondary batteries 16 to fix the secondary batteries 16. The first fixing frame 22 encircles the top ends of the secondary batteries 16, which have the electric conduction terminals 162 and the pressure-relief valves 164. The first fixing frame 22 has a plurality of through holes 220 to reveal the electric conduction terminals 162 and the pressure-relief valves 164. The second fixing frame 24 is disposed at the bottom ends of the secondary batteries 16, which have neither the electric conduction terminals 162 nor the pressure-relief valves 164. The first fixing frame 22 and the second fixing frame 24 cooperate to fix the secondary batteries 16 arranged side by side, whereby to facilitate the succeeding process for forming the protection layer 30.

In conclusion, the present invention can prevent the battery assembly from overheating via absorbing heat generated by the battery assembly and conducting the heat to the exterior. The present invention can prevent the battery assembly from being damped via isolating the battery assembly from the external air and humidity. The present invention can further prevent the battery assembly from freezing. Moreover, the present invention has simple structure, high fabrication efficiency and low fabrication cost.

The embodiments described above are only to exemplify the present invention but not to limit the scope of the present invention. Any equivalent modification or variation according to the characteristic or spirit of the present invention is to be also included within the scope of the present invention, which is based on the claims stated below.

## Claims

1. A secondary battery assembly with enhanced protection, comprising
a battery assembly whose two sides respectively have two electric conduction members each electrically connected with a lead;
a casing having an accommodation space accommodating said battery assembly; and
a protection layer into said casing fully to wrap said battery assembly and being in a solid state at an ambient temperature.

2. The secondary battery assembly with enhanced protection according to claim 1, wherein said protection layer is in a liquid state at a temperature of 46-90°C.

3. The secondary battery assembly with enhanced protection according to claim 1, wherein said protection layer is made of wax.

4. The secondary battery assembly with enhanced protection according to claim 1, wherein said casing is made of a metallic material.

5. The secondary battery assembly with enhanced protection according to claim 4, wherein said casing is made of aluminum.

6. The secondary battery assembly with enhanced protection according to claim 1, wherein said battery assembly includes a plurality of secondary batteries arranged side by side, wherein each said secondary battery has two electric conduction terminals, and wherein each said electric conduction terminal is connected with said electric conduction terminal of a neighboring one of said secondary batteries to cascade said secondary batteries, and wherein one said electric conduction terminal of a first one of said secondary batteries is not connected with said electric conduction terminal of a neighboring one of said secondary batteries, and wherein one said electric conduction terminal of a last one of said secondary batteries is not connected with said electric conduction terminal of a neighboring one of said secondary batteries, and wherein said electric conduction terminal of said first one of said secondary batteries and said electric conduction terminal of said last one of said secondary batteries are used as said electric conduction members.

7. The secondary battery assembly with enhanced protection according to claim 6, wherein a pressure-relief valve is arranged between said two electric conduction terminals of each said secondary battery for releasing internal pressure of said secondary battery.

8. The secondary battery assembly with enhanced protection according to claim 7 further comprising a first fixing frame and a second fixing frame respectively arranged at two ends of said secondary batteries for fixing said secondary batteries, wherein said first fixing frame encircles ends of said secondary batteries, which have said electric conduction terminals and said pressure-relief valves, and wherein said first fixing frame has a plurality of through holes revealing said electric conduction terminals and said pressure-relief valves.

9. The secondary battery assembly with enhanced protection according to claim 6, wherein said secondary batteries include a plurality of electric conduction plates, and wherein each said electric conduction plate is locked to two neighboring ones of said electric conduction terminals for cascading said secondary batteries.

10. The secondary battery assembly with enhanced protection according to claim 9, wherein said electric conduction plate is locked to two neighboring ones of said electric conduction terminals with fixing elements.
